# EUROPÄISCHE PATENTSCHRIFT

(11) **EP 1 715 175 B1**
(45) Veröffentlichungstag und Bekanntmachung des Hinweises auf die Patenterteilung: **17.02.2010**
(21) Anmeldenummer: 06006163.7
(22) Anmeldetag: 24.03.2006
(51) Int. Cl.: F02M 31/125

(54) **Heizeinrichtung für ein gasförmiges oder flüssiges zu beheizendes Medium**
Heating device for a gaseous or liquid medium to be heated
Dispositif de chauffage pour un élément gazeux ou un élément liquide à chauffer

(30) Priorität: 20.04.2005 DE 202005006326 U
(43) Veröffentlichungstag der Anmeldung: 25.10.2006
(73) Patentinhaber: DBK David + Baader GmbH, 76870 Kandel/Pfalz (DE)
(72) Erfinder: Gschwind, Thomas Dipl.-Ing., 67098 Bad Dürkheim (DE)
(74) Vertreter: Polte, Willi

(56) Entgegenhaltungen:
- EP-A- 0 284 120
- EP-A- 0 693 623
- EP-A- 1 510 686

## Beschreibung

Die Erfindung betrifft eine Heizeinrichtung für ein gasförmiges oder flüssiges zu beheizendes Medium, gemäß dem Oberbegriff des Anspruchs 1..

Eine gattungsgemäße Heizeinrichtung ist aus der Druckschrift EP-A-0 284 120 bekannt. Eine ähnliche Heizeinrichtung ist beispielsweise aus der WO 2005/04221 A1 oder der EP-A-0 693 623 bekannt und wird gewöhnlich im Automobilbereich als sogenannter Inline-Heizer vor dem Dieselfilter in die Kraftstoffleitung eingeschleift.

Unter dem Gesichtspunkt der Kosteneinsparungen aufgrund des enormen Wettbewerbs im Automobilzulieferbereich verlangt der Markt nach immer kleineren und leichteren Bauteilen bei verbesserter Qualität bzw. Leistung und zu günstigeren Preisen.

Der Erfindung liegt deshalb die Aufgabe zugrunde, eine herkömmliche, gattungsgemäße Heizeinrichtung im Hinblick auf die gestiegenen Anforderungen zu verbessern, und im Speziellen eine Heizeinrichtung bereitzustellen, die bei verringerter Größe eine verbesserte Heizleitung bietet und überdies kostengünstiger herstellbar ist.

Um diese Aufgabe zu lösen, stellt die Erfindung die Heizeinrichtung gemäß Anspruch 1 bereit. Die erfindungsgemäße Heizeinrichtung umfasst Kanalbegrenzungsabschnitte, die mit wenigstens einer der Kontaktplatten und/oder dem Heizelement zumindest abschnittsweise einen im Wesentlichen mäanderförmigen oder schleifenförmigen Kanal zum Hindurchleiten des zu beheizenden Mediums bilden. Durch das Bereitstellen der Kanalbegrenzungsabschnitte und durch das Bilden des mäanderförmigen Kanals wird der Wärmeübergang zwischen der Kontaktplatte bzw. dem Heizelement und dem zu beheizenden Medium erheblich verbessert. Dies beruht zum einen auf einer durch den mäanderförmigen Verlauf des Kanals begründeten Verlängerung der vom zu beheizenden Medium zu überströmenden Strecke auf dem Kontaktelement und/oder dem Heizelement, und zum anderen darauf, dass sich die einzelnen mäanderförmigen Abschnitte des Kanals gegenseitig beheizen, während durch die Kanalbegrenzungsabschnitte zusätzlich Wärme auf das zu beheizende Medium übertragen wird. Ein weiterer Vorteil der mäanderförmigen Kraftstoffführung ist die Bildung einer turbulenten Strömung, welche zur verbesserten Wärmeaufnahme geeignet ist. Aufgrund der stark verbesserten Wärmeübertragung zwischen den Kontaktelementen bzw. dem Heizelement und dem zu beheizenden Medium lässt sich der vorhandene Bauraum deutlich besser ausnutzen als bei herkömmlichen Heizeinrichtungen, so dass die der Erfindung zugrunde liegende Aufgabe gelöst wird.

In einer bevorzugten Ausführungsform erstrecken sich die Kanalbegrenzungsabschnitte im Wesentlichen senkrecht zum Kontaktelement. So wird die verfügbare Heizfläche vergrößert und die vom Heizelement erzeugte Wärme optimal auf das zu beheizende Medium übertragen.

Derselbe Vorteil bietet sich auch dann, wenn sich die Kanalbegrenzungsabschnitte im Wesentlichen senkrecht zum Heizelement erstrecken.

In einer bevorzugten Ausführungsform der Erfindung sind die Kanalbegrenzungsabschnitte mit dem Gehäuse fest verbunden. Dies erleichtert das Herstellungsverfahren, insofern als die Kanalbegrenzungsabschnitte beispielsweise im Spritzgießverfahren einteilig mit dem Gehäuse gefertigt werden können, was die Anzahl der Bauteile sowie die Anzahl der Fertigungsschritte reduziert und die Herstellungskosten weiter verringert.

In einer weiteren bevorzugten Ausführungsform sind die Kanalbegrenzungsabschnitte mit der Kontaktplatte fest verbunden. Dies bewirkt einen idealen Wärmeübergang zwischen dem unmittelbar am Heizelement anliegenden Kontaktelement und den Kanalbegrenzungsabschnitten. Dadurch kann die vom Heizelement erzeugte Wärme über das Kontaktelement und die Kanalbegrenzungsabschnitte besser auf das zu beheizende Medium übertragen werden, wodurch die Heizleistung weiter gesteigert wird. Zudem können die Kanalbegrenzungsabschnitte einteilig mit dem Kontaktelement gefertigt werden, was ebenso die Anzahl der Bauteile sowie die Anzahl der Fertigungsschritte reduziert und die Herstellungskosten weiter verringert. Beispielsweise werden dazu im Wesentlichen rechteckige Vorsprünge aus dem Material des Kontaktelements freigeschnitten, indem das umliegende Material durch Ausstanzen entfernt wird. Durch Biegung werden die freigeschnittenen Vorsprünge zu den Kanalbegrenzungsabschnitten geformt.

In einer weiteren bevorzugten Ausführungsform der Erfindung umfasst das Heizelement ein gesondertes, Kanalbegrenzungsabschnitte aufweisendes Kanalbildungselement. Dazu muss weder das Gehäuse noch das Kontaktelement Kanalbegrenzungsabschnitte aufweisen. Dies erleichtert die Herstellung, insbesondere die Formgebung sowohl des Gehäuses als auch des Kontaktelements. Durch Beigabe eines gesonderten Kanalbildungselements in das Aufnahmevolumen des Gehäuses, in welchem das zu beheizende Medium vom Gehäuseeingang zum Gehäuseausgang fließt und dabei das Kontaktelement oder das Heizelement umströmt, wird das zu beheizende Medium mäanderförmig oder schleifenförmig kanalisiert, um insgesamt eine größere Strecke beim Umströmen des Kontaktelements und/oder des Heizelements zurückzulegen.

Dabei ist es von Vorteil, wenn die Kanalbegrenzungsabschnitte zwischen einer Gehäuseinnenseite und einer Kontaktplatte und/oder dem Heizelement angeordnet sind. Dadurch wird das zu beheizende Medium beim Durchströmen des Gehäuses optimal an die beheizten Flächen des Kontaktelements und/oder des Heizelements hingeführt.

Erfindungsgemäß ist zumindest ein Kontaktelement als Federelement ausgebildet, um den Kontaktdruck zwischen dem Kontaktelement und dem Heizelement herzustellen, wobei die Kanalbegrenzungsabschnitte als Federkraft erzeugende Federabschnitte dienen. Dazu sind die Kanalbegrenzungsabschnitte vorzugsweise mit dem Kontaktelement verbunden und stehen im Wesentlichen senkrecht von der Oberfläche des Kontaktelements hervor. Vorzugsweise ist das Kontaktelement dabei mit einer Dreifachfunktion belegt, nämlich 1) dem Herstellen des elektrisch leitenden Kontakts zum Anschließen des Heizelements, 2) dem Herstellen des Kontaktdrucks zwischen dem Kontaktelement und dem Heizelement, und 3) dem Bilden eines Kanals zur Führung des zu beheizenden Mediums durch das Aufnahmevolumen des Gehäuses, um das Kontaktelement und/oder das Heizelement optimal zu umströmen und einen besonders guten Wärmeübergang zu gewährleisten. Dadurch wird die erforderliche Anzahl der Bauteile sowie die Anzahl der Fertigungsschritte weiter reduziert und die Herstellungskosten weiter verringert.

Es erleichtert den Zusammenbau der erfindungsgemäßen Heizeinrichtung erheblich, wenn die Kontaktelemente und das dazwischen liegende Heizelement mit dem Deckel zu einer Vormontagebaueinheit verbunden sind, und die Vormontagebaueinheit mit einer Aufnahmestruktur des Gehäuses verbindbar ist und/oder in einer Aufnahmestruktur des Gehäuses aufnehmbar ist.

Wärme wird in erster Linie durch den Widerstand des Heizelements beim Hindurchleiten eines elektrischen Stroms erzeugt. Die Heizleistung der erfindungsgemäßen Heizeinrichtung kann daher weiter erhöht werden, wenn das Kontaktelement Aussparungen aufweist, durch welche das durch den Kanal fließende Medium unmittelbar in Kontakt mit dem Heizelement gelangen kann.

Der vorhandene Raum des Aufnahmevolumens im Inneren des Gehäuses kann optimal ausgenutzt werden, wenn die Fließrichtung des durch den Kanal fließenden Mediums im Wesentlichen längs und/oder quer zu den Kanten des Kontaktelements verläuft.

In einer besonders einfach herzustellenden und zu montierenden Ausführung der Erfindung umfasst das Gehäuse eine Aufnahmestruktur mit einem Aufnahmevolumen zur Aufnahme der Kontaktelemente und des Heizelements, und einen Deckel zum Verschließen des Aufnahmevolumens, wobei der Deckel zumindest eine Anschlussstelle aufweist, um das zu beheizende Medium ein- und/oder auszuleiten.

Es erleichtert den Anschluss der Heizeinrichtung an das Bordnetz eines Kraftfahrzeugs, wenn der Deckel zumindest einen elektrischen Anschluss zum Anschließen der Kontaktelemente an einen Stromkreis aufweist.

Dabei ist es hilfreich, wenn elektrisch leitende Abschnitte zum Anschließen der Kontaktelemente an einen Stromkreis den Deckel durchdringen.

### Kurze Beschreibung der Zeichnungen

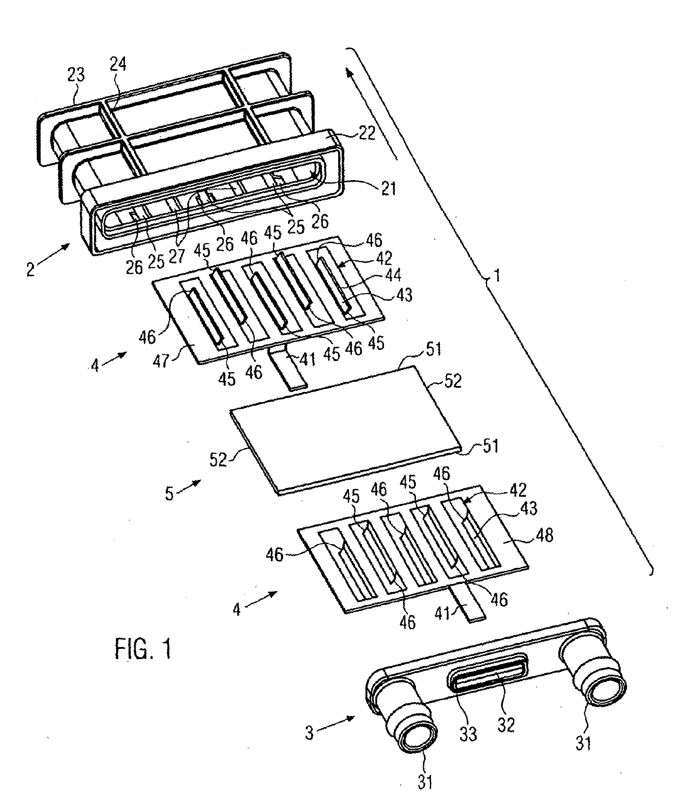

- Figur 1: zeigt eine Explosionsdarstellung des erfindungsgemäßen Kompaktheizers.
- Figur 2: zeigt einen Gehäusedeckel mit aufgesteckten Kontaktblechen und einem dazwischen liegenden PTC-Heizelement.
- Figur 3: zeigt eine aufgeschnittene Gesamtansicht des erfindungsgemäßen Kompaktheizers im zusammengebauten Zustand.
- Figur 4: zeigte eine Gesamtansicht des erfindungsgemäßen Kompaktheizers in einer Gesamtansicht im zusammengebauten Zustand.

### Detaillierte Beschreibung der Zeichnungen

In der nachfolgenden Beschreibung werden positionsangebende Begriffe wie "oben", "unten", "links", "rechts" oder dergleichen verwendet, die dem besseren Verständnis der Erfindungsbeschreibung dienen. Diese positionsangebenden Bezeichnungen sind jeweils nur im Bezug auf die jeweilige Darstellung der Zeichnung zu verstehen und haben darüber hinaus keinen bindenden Charakter.

Die Erfindung betrifft eine Heizeinrichtung 1 für ein gasförmiges oder flüssiges zu beheizendes Medium, vorzugsweise Dieselkraftstoff, mit einem Gehäuse 2, 3, zumindest zwei im Wesentlichen in dem Gehäuse 2, 3 angeordneten und vorzugsweise plattenförmigen Kontaktelementen 4 und wenigstens einem zumindest abschnittsweise zwischen den beiden Kontaktelementen angeordneten Heizelement 5.

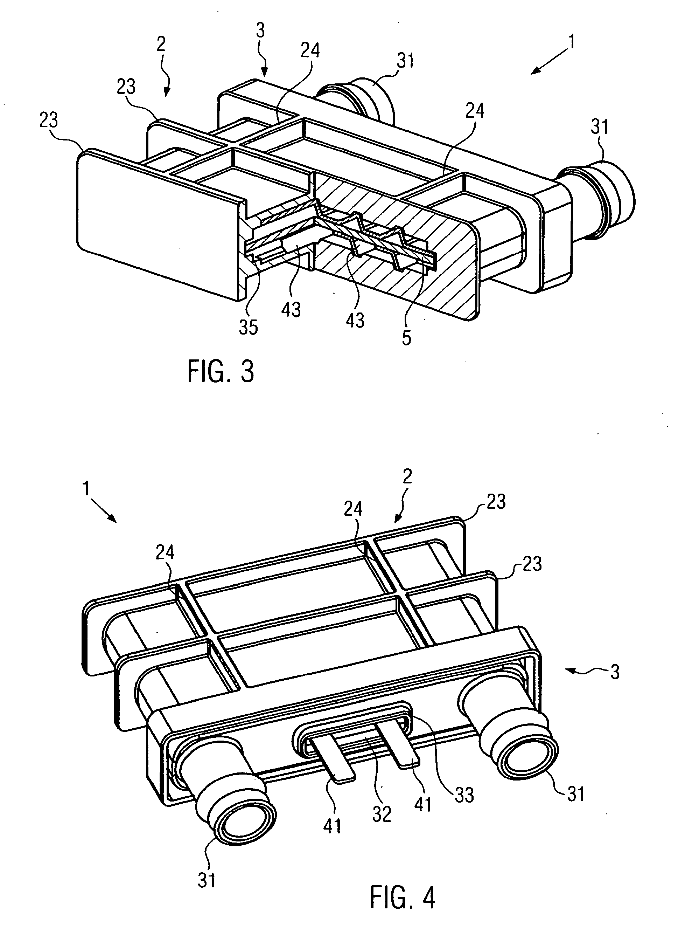

Zunächst werden die Merkmale des Gehäuses 2, 3 beschrieben. Das Gehäuse 2, 3, das vorzugsweise aus Kunststoff besteht und im Spritzgießverfahren hergestellt wird, umfasst eine Aufnahmestruktur 2 mit einem Aufnahmevolumen zur Aufnahme der Kontaktelemente 4 und des Heizelements 5, sowie einen Deckel 3 zum Verschließen des Aufnahmevolumens. Die Aufnahmestruktur 2 umfasst eine im Wesentlichen quaderförmige Grundstruktur mit einer Höhe von z.B. ca. 15 mm, einer Breite von z.B. ca. 60 mm und einer Tiefe von z.B. ca. 35 mm. An einer Aufnahmeseite weist die Aufnahmestruktur 2 eine im Wesentlichen rechteckige Aufnahmeöffnung 22 auf, durch welche das im Wesentlichen quaderförmige Aufnahmevolumen im Inneren der Aufnahmestruktur 2 zugänglich ist. Die geöffnete Aufnahmeseite der Aufnahmestruktur 2 ist von einem umlaufenden Rand umgeben, der eine Fassung zur Aufnahme des Gehäusedeckels 3 bildet. An der Außenseite der AufnahmeStruktur 2 sind längs und quer zu den Außenkanten Versteifungsrippen 23 und 24 vorgesehen, die senkrecht zueinander verlaufen können. Das quaderförmige Aufnahmevolumen der Aufnahmestruktur weist eine Größe von z.B. ca. 10 mm x 50 mm x 40 mm auf und wird von einer Gehäuseinnenseite begrenzt. Die Gehäuseinnenseite ist mit Führungs- und Halterillen 25, 27 versehen, die von der Aufnahmeöffnung 22 parallel in Richtung des Gehäusebodens verlaufen. An ihrer aufnahmeseitigen Mündung weisen die mittleren sowie die jeweils äußeren Halterillen 25 zusätzliche, rechteckige Aussparungen 26 zur Aufnahme von speziellen Klemmbacken 34 auf, die später im Zusammenhang mit dem Deckel 3 beschrieben werden und zum Festklemmen der Kontaktplatten 4 und des Heizelements 5 an der Deckelinnenseite sowie zur Strömungsführung vorgesehen sind. An den jeweils zwischen den mittleren und den äußeren Halterillen 25 liegenden Halterillen 27 sind endseitig am Gehäuseboden weitere Klemmbacken 35, wie in Fig. 3 gezeigt, vorgesehen, die zum Festklemmen der Kontaktelemente 4 und des Heizelements 5 am Gehäuseboden dienen.

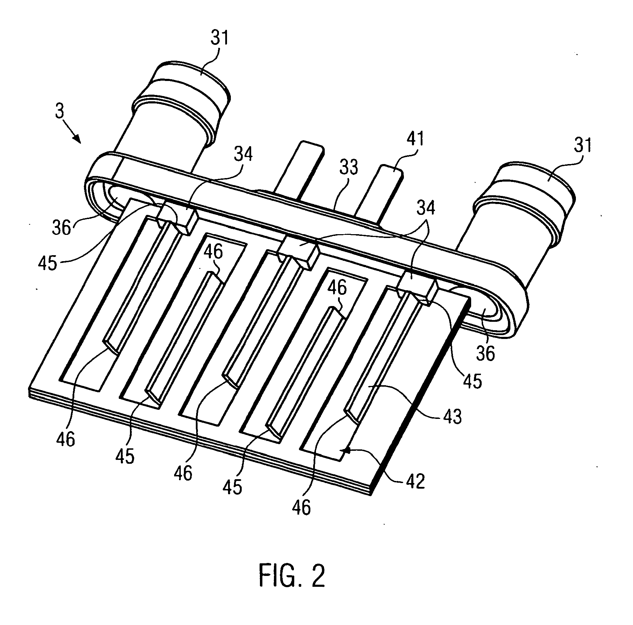

Der Gehäusedeckel 3 ist dazu vorgesehen und entsprechend konstruiert, um die Aufnahmeöffnung 22 der Aufnahmestruktur 2 fluiddicht abzuschließen. Dazu wird der Deckel 3 an der Aufnahmestruktur 2 mit zwischenliegender Dichtung verclipst oder verschweißt. Der Deckel 3 weist zwei zylindrische Anschlussstutzen bzw. Anschlusszapfen bzw. Anschlussnippel 31 sowie eine zwischen den Anschlussstutzen 31 angeordnete Durchgangsöffnung 32 für die Kontaktanschlüsse 41 der Kontaktelemente 4 auf. Die Anschlussstutzen 31 können alternativ oder zusätzlich an der Aufnahmestruktur 2 angeformt werden. Um die Durchgangsöffnung 32 ist ein umlaufender Rand 33 ausgebildet. An die Anschlussnippel 31 können rohrförmige Leitungen zum Transport eines zu beheizenden Mediums angeschlossen werden, um den Kompaktheizer 1 als Inline-Heizeinrichtung vor einem Kraftstofffilter in die Kraftstoffführung einzuschleifen. Einer der beiden Anschlussstutzen bzw. Anschlussnippel 31 wird dabei als Gehäuseeingang, durch welchen das zu beheizende Medium, vorzugsweise Dieselkraftstoff, in das Gehäuseinnere bzw. in das Aufnahmevolumen des Gehäuses 2, 3 eingeleitet wird, verwendet, wobei der jeweils andere Anschlussstutzen bzw. Anschlussnippel 31 als Gehäuseausgang dient, um das beheizte Medium wieder aus dem Gehäuse 2, 3 auszuleiten. Durch eine jedem Anschlussstutzen 31 zugeordnete, kreisrunde Öffnung 36 tritt das zu beheizende Medium in das Aufnahmevolumen des Gehäuses 2, 3 ein bzw. aus Aufnahmevolumen wieder aus. Jeder der beiden Anschlussstutzen bzw. Anschlussnippel 31 kann als Eingang oder Ausgang dienen, da der erfindungsgemäße Kompaktheizer 1 in beiden Richtungen betrieben werden kann. Wie in Figur 2 gezeigt wird, befinden sich an der Deckelinnenseite drei gleichmäßig voneinander beabstandete Klemmbackenpaare 34 zum Festklemmen der beiden Kontaktplatten 4 und des dazwischen liegenden Heizelements 5 und zum Umgreifen der jeweiligen Längsränder oder -kanten im montierten Zustand sowie zur Strömungsführung. In der Art einer Sandwichbauweise werden die beiden Kontaktelemente 4 und das dazwischen liegende Heizelement 5 mit dem Deckel 3 zu einer kompakten Vormontagebaueinheit verbunden.

Nachstehend werden die Merkmale der Kontaktelemente 4 beschrieben. Beide Kontaktelemente 4 sind von identischer Bauart, sind im Wesentlichen plattenförmig und weisen eine rechteckige Grundform mit jeweils einem längsrandseitig hervorstehenden Kontaktanschluss 41 auf. Die Kontaktelemente 4 bestehen im Wesentlichen aus einem elektrisch leitenden Material und sind vorzugsweise aus dünnen, rechteckigen Blechplatten geformt. Die von den Längs- und Querkanten eines Kontaktelements 4 definierte Ebene wird nachstehend als die Grundebene oder die Hauptebene des Kontaktelements 4 bezeichnet. Die Kontaktelemente 4 werden im Rahmen dieser Erfindung auch als Kontaktplatten oder Kontaktbleche bezeichnet. Ein Kontaktelement 4 weist insgesamt fünf in Längsrichtung hintereinander liegende und quer zur Längsrichtung verlaufende, im Wesentlichen rechteckige Durchbrüche 42 bzw. Ausstanzbereiche 42 auf, in welche von einem jeweiligen Randbereich der Aussparung 42 ein rechteckiger Vorsprung 43 in Längsrichtung der Kontaktplatte 4 hineinragt. Die Vorderseite des Kontaktelements 4 ist dabei diejenige Seite, von welcher die Vorsprünge 43 hervorstehen. Die Rückseite des Kontaktelements 4 ist folglich die Seite, die in Anlage an das Heizelement 5 gebracht wird, um den Wärmeübergang auf das Kontaktelement 4 sicherzustellen. Die rechteckigen Vorsprünge 43 werden vorzugsweise aus dem Material des Kontaktelements 4 freigeschnitten bzw. durch Herausstanzen des umliegenden Materials erzeugt, wobei die Vorsprünge 43 fest mit dem jeweiligen Kontaktelement 4 verbunden bleiben. Jeder Vorsprung 43 ist dabei um eine Biegelinie, die im Wesentlichen entlang eines gedachten Randes jedes im Wesentlichen rechteckigen Ausstanzbereiches 42 verläuft, z.B. in einem Winkel von etwas weniger als 90° gegenüber der Grundebene abgebogen und steht gegenüber der Grundebene im gleichen Winkel und mit gleicher freier Länge lamellenartig hervor. Ferner erstrecken sich die Vorsprünge 43 im Wesentlichen senkrecht zu den Längskanten und parallel zu den Querkanten des Kontaktelements 4. Die freiliegenden, oberen Kanten 44 der gebogenen Vorsprünge 43 liegen im Wesentlichen auf derselben Höhe über der Grundebene und definieren eine zu der Grundebene im Wesentlichen parallele Ebene. Ferner sind die freiliegenden Kanten 44 der Vorsprünge 43 dafür vorgesehen, um mit den Halterillen 25 und 27 an der Gehäuseinnenseite der Aufnahmestruktur 2 in Eingriff gebracht zu werden. Aus der Ansicht der Figur 2 ergibt sich, dass die Vorsprünge 43 - in Längsrichtung des Kontaktelements 4 gesehen - seitlich zueinander, d.h. entlang der Breite des Kontaktelements 4, versetzt sind. Während die Seitenkanten 45 der beiden äußeren sowie des mittleren Vorsprungs 43 näher bei der Längskante des Kontaktelements 4, über welche der Kontaktanschluss 41 hervorsteht, liegen, liegen die Seitenkanten 45 der dazwischen liegenden Vorsprünge 43 jeweils näher bei der anderen Längskante des Kontaktelements 4. Insgesamt ist pro Kontaktelement 4 eine ungerade Anzahl von Aussparungen 42 bzw. Vorsprüngen 43 vorgesehen, wobei sich das Schema der versetzten Anordnung der Vorsprünge 43 nach dem genannten Vorbild wiederholt. Wichtig ist, dass die Seitenkanten 45 der beiden äußeren Vorsprünge 43 näher bei der Längskante des Kontaktelements 4, über welche der Kontaktanschluss 41 hervorsteht, liegen.

Wie nachstehend noch verdeutlicht wird, ist jedes Kontaktelement 4 mit einer Mehrfachfunktion belegt. Wie in gewöhnlichen Heizeinrichtungen der gattungsgemäßen Bauart sind die Kontaktelemente 4 unter anderem dazu vorgesehen, den elektrischen Kontakt mit dem Heizelement 5 herzustellen und dieses an ein Stromnetz z.B. das Bordnetz eines Kraftfahrzeugs anzuschließen, so dass ein die Kontaktelemente 4 bzw. das Heizelement 5 umströmendes, zu beheizendes Medium, vorzugsweise Dieselkraftstoff, beheizt wird. Daneben dienen die Vorsprünge 43, die einteilig mit den Kontaktelementen 4 gefertigt sind und demnach fest mit den Kontaktelementen 4 verbunden sind, als Federabschnitte und die Kontaktelemente 4 gleichermaßen als Federelemente, um den Kontaktdruck zwischen den Kontaktelementen 4 und dem Heizelement 5 herzustellen. Dabei stützen sich die Vorsprünge 43, die jeweils in den dafür vorgesehenen Halterillen 25, 27 der Aufnahmestruktur 2 geführt und aufgenommen werden, an der Gehäuseinnenseite ab. Aufgrund der speziellen Ausgestaltung und Anordnung der Vorsprünge 43 in dem von zu dem beheizenden Medium durchströmten Aufnahmevolumen wird durch die Vorsprünge 43 ein mäanderförmiger bzw. schleifenförmiger Kanal zum Hindurchleiten und Hindurchführen des zu beheizenden Mediums zwischen dem Gehäuseeingang und dem Gehäuseausgang gebildet. Demnach dienen die Vorsprünge 43 auch als Kanalbildungsabschnitte zur Bildung des Kanals. Die Wand des Kanals wird dabei abschnittsweise durch die Gehäuseinnenseite, die Kontaktelemente 4, insbesondere durch die Vorsprünge 43, als auch durch das Heizelement 5 selbst gebildet, wobei die Vorsprünge 43 den Abstand zwischen den Kontaktelementen 4 bzw. dem Heizelement 5 und der Gehäuseinnenseite sicherstellen.

Der durch die erfindungsgemäße Lösung bewirkte Effekt beruht in der Vergrößerung des Wärmeübergangskoeffizienten zwischen dem Heizelement bzw. der Kontaktplatte und dem zu beheizenden Medium durch Verlängerung der zu überströmenden Strecke. Unter dem Begriff Kanalbegrenzungsabschnitt 43 ist im Rahmen der Erfindung jedes Mittel zu verstehen, welches die vom zu beheizenden Medium im Gehäuseinneren zurückzulegende Strecke zwischen den zwei Öffnungen 36 in irgendeiner Weise verlängert. Die Kanalbildungsabschnitte 43 können in gleicher Weise auch auf Seiten des Gehäuses 2, 3 angeordnet und fest mit dem Gehäuse 2, 3 verbunden sein, oder beispielsweise als Bestandteile eines gesondert in das Aufnahmevolumen, vorzugsweise zwischen den Kontaktelementen 4 bzw. dem Heizelement 5 und der Gehäuseinnenseite anzuordnenden Kanalbildungselements vorgesehen sein. Zusätzlich wird das zu beheizenden Medium durch die Kanalbegrenzungsabschnitte beheizt, weshalb der beabsichtigte Effekt mit steigender Anzahl von Kanalbegrenzungsabschnitten zunimmt.

Das in der erfindungsgemäßen Heizeinrichtung 1 verwendete Heizelement 5 ist ein PTC-(Positive-Temperature-Coefficient) Heizelement und weist einen im Wesentlichen rechteckigen Umfang, d. h. eine flache Quaderform auf. Die Funktionsweise derartiger PTC-Heizelemente wird als bekannt vorausgesetzt und im Rahmen dieser Erfindung nicht näher erläutert.

Die Kontaktelemente 4 sind der Größe bzw. dem Umfang nach dem Heizelement 5 angepasst. Wie in Figur 2 der beiliegenden Zeichnungen gezeigt wird, werden jeweils die flachen Rückseiten der Kontaktelemente 4 in Anlage an das Heizelement 5 gebracht, so dass die Längs- und Querkanten der Kontaktelemente 4 jeweils bündig mit den Längs- und Querkanten 51, 52 des Heizelements 5 abschließen. Sandwichartig werden die Kontaktelemente 4 mit dem dazwischen liegenden bzw. dazwischen aufgenommenen Heizelement 5 übereinandergelegt und am Deckel 3 vormontiert. Dazu werden diejenigen Längsrandseiten der Kontaktelemente 4, über welche die Kontaktanschlüsse 41 hervorstehen, in Anlage an die Deckelinnenseite gebracht, so dass der äußere Seitenrand 45 ohne Spalt mit der jeweils zugeordneten Klemmbacke 34 an der Deckelinnenseite abschließt und die freiliegenden Kanten 44 der äußeren und mittleren Vorsprünge 43 auf gleicher Höhe mit den Oberseiten der Klemmbacken 34 liegen und bündig abschließend in diese übergehen. Dabei werden die jeweiligen Vorderseiten der Kontaktelemente 4, von welchen die Vorsprünge 43 hervorstehen, zwischen dem Paar von Klemmbacken 34 eingeklemmt. In dem in Figur 2 gezeigten Vormontagezustand, befinden sich die jeweiligen Längskanten der Kontaktelemente 4 und des Heizelements 5 in Anlage mit der Deckelinnenseite, wobei die beiden Enden der an der Deckelinnenseite anliegenden Längskanten bis in die Mitte der Einlass- und Ausgangsöffnungen 36 der Anschlussstutzen 31 hineinragen. Dadurch wird sichergestellt, dass die beiden Kontaktelemente 4 gleichmäßig umströmt werden. Wenn die Kontaktelemente 4 und das Heizelement 5 wie in Fig. 2 gezeigt, am Deckel 3 vormontiert sind, ragen die Kontaktanschlüsse 41 der beiden Kontaktelemente 4 durch den vorgesehenen Durchbruch 32 am Deckel 3 mittig zwischen beiden Anschlussstutzen 31 hindurch und stehen über den Deckel 3 hervor. Die Kontaktanschlüsse 41 sind dabei als Steckzungen ausgeführt. Der elektrische Anschluss kann aber auch durch Anschlagen von Litzen oder durch einen Stecker erfolgen. Das Steckergesicht ist dann am Deckel 3 angeformt.

Figur 3 zeigt den erfindungsgemäßen Kompaktheizer 1 im Montagezustand in einer Gesamtdarstellung, wobei das rechte untere Viertel des Gehäuses, unterhalb der mittleren Versteifungsrippe 21, von der Gehäusemitte ausgehend aufgeschnitten ist. In dieser Ansicht ist zu sehen, wie sich die Vorsprünge 43 im Eingriff mit den Halterillen 25, 27 an der Gehäuseinnenseite befinden. Durch die am Gehäuseboden vorgesehenen Klemmbacken 35 (nur ein Klemmbackenpaar ist in Fig. 3 dargestellt) werden die Kontaktelemente 4 mit dem dazwischen liegenden Heizelement 5 festgeklemmt und sandwichartig zusammen gehalten. Die jeweils näher an einer der Längskanten des Kontaktelements 4 liegende Seitenkante 45 eines Vorsprungs 43 grenzt dabei an eine der am Gehäusedeckel 3 oder dem Gehäuseboden vorgesehenen Klemmbacken 34, 35 an. Dadurch wird der Übergang zwischen der jeweiligen Seitenkante 45 des Vorsprungs 43 und der jeweils zugeordneten Klemmbacke 34, 35 im Wesentlichen fluiddicht abgeschlossen, so dass ein auf den Vorsprung 43 prallender Fluidstrom des zu beheizenden Mediums an dem als Kanalbildungsabschnitt dienenden Vorsprung 43 umgelenkt wird. Wie sich aus den Darstellungen der Figuren 2 und 3 ergibt, wird durch die eben beschriebene Anordnung der Vorsprünge 43 im Aufnahmevolumen zwischen den Kontaktelementen 4 bzw. dem Heizelement 5 und der Gehäuseinnenseite beiderseits des PTC-Heizelements jeweils ein mäanderförmiger Kanal gebildet, der sich zwischen den beiden Öffnungen 36 erstreckt. Die Aussparungen bzw. Durchbrüche 42 zu Bildung der Vorsprünge 43 in den Kontaktelementen 4 sind entsprechend groß, um den durch den Kanal geleiteten Fluid den bestmöglichen Kontakt, d. h. den bestmöglichen Wärmeübergang zum PTC-Heizelement 5 zu verschaffen.

Figur 4 zeigt die Gesamtansicht des erfindungsgemäßen Kompaktheizers 1 im Montagezustand.

Nachstehend wird die Montage des bevorzugten Ausführungsbeispiels und die bevorzugte Anwendung des erfindungsgemäßen Kompaktheizers 1 mit Bezug auf die beiliegenden Zeichnungen beschrieben.

Wie in Figur 2 gezeigt ist, werden die beiden Kontaktelemente 4 jeweils mit der Rückseite 47 in Anlage an das PTC-Heizelement 5 gebracht, so dass die jeweiligen Außenkanten der Kontaktelemente 4 und des Heizelements 5 bündig abschließen und sich die beiden Kontaktanschlüsse 41 der Kontaktelemente 4 in gleicher Richtung erstrecken. Anschließend wird die aus den Kontaktelementen 4 und dem dazwischen liegenden Heizelement 5 bestehende Baugruppe an der Deckelinnenseite, wie oben beschrieben, festgeklemmt. Dazu werden die jeweils zur Deckelinnenseite weisenden Längskanten der Kontaktelemente 4 bzw. des Heizelements 5 von den insgesamt drei gleichmäßig voneinander beabstandeten Klemmbacken 34 umgriffen, welche auf die jeweils freiliegenden Oberflächen bzw. Vorderseiten der Kontaktelemente 4 drücken. Dabei erstrecken sich die Kontaktanschlüsse 41 der Kontaktelemente 4 durch die Durchgangsöffnung 32 des Gehäusedeckels 3 hindurch. Die Abdichtung zwischen den Kontaktanschlüssen 41 und dem Deckel 3 erfolgt z.B. mittels Dichtungselementen oder Vergussmassen. In der in Figur 2 gezeigten Vormontageposition wird der Gehäusedeckel 3 mit der aus den beiden Kontaktelementen 4 und dem dazwischen liegenden Heizelement 5 gebildeten, kompakten Einheit von der Aufnahmeseite durch die Aufnahmeöffnung 22 in das Aufnahmevolumen der Aufnahmestruktur 2 eingesteckt und mit der Aufnahmestruktur 2 verbunden. Die Position, Lage und Größe der Halterillen 25 und 27 ist dabei auf die Position, Lage und Größe der Vorsprünge 43 abgestimmt. Beim Zusammenstecken der in Figur 2 gezeigten Vormontageeinheit mit der Aufnahmestruktur 2 lassen sich die Vorsprünge 43 leicht in den Halterillen 25 und 27 führen, bis sich die freiliegenden, von der Deckelinnenseite abgewandten Längskanten der Kontaktelemente 4 und des Heizelements 5 am Boden des Aufnahmevolumens befinden. Am Boden der Aufnahmestruktur 2 werden die freiliegenden, von der Deckelinnenseite abgewandten Längskanten der Kontaktelemente 4 bzw. des Heizelements 5 in ähnlicher Weise wie die der Deckelinnenseite zugewandten Längskanten von den Klemmbacken 35 (Fig. 3) umgriffen, die auf die Vorderseiten der Kontaktelemente 4 drücken, um die Kontaktelemente 4 und das PTC-Heizelement 5 festzuklemmen. Die Vorsprünge 43, die aufgrund ihrer gegenüber der Ebene der Kontaktplatten 4 gebogenen Form federnde Eigenschaften aufweisen, verstärken gerade in den mittleren Bereichen der Kontaktelemente 4 den Kontaktdruck gegenüber dem Heizelement 5. Demnach werden die Vorsprünge auch als Federabschnitte 43 bezeichnet. In dem in Fig. 3 veranschaulichen und oben beschriebenen Montagezustand bilden die lamellenartig aus der Ebene des jeweiligen Kontaktelements 4 hervorstehenden und seitlich zueinander versetzten Vorsprünge 43 den mäanderförmigen oder schleifenförmigen Kanal. Dabei ergibt sich auf beiden Seiten des PTC-Heizelements 5 im Wesentlichen ein identisches Bild.

Um die erfindungsgemäße Heizeinrichtung 1 in Betrieb zu nehmen, werden an die Anschlussnippel 31 rohrförmige Leitungen zum Transport eines zu beheizenden Mediums angeschlossen, um den Kompaktheizer 1 als Inline-Heizeinrichtung vor einem Kraftstofffilter in die Kraftstoffführung einzuschleifen. Durch eine der angeschlossenen Leitungen wird der Heizeinrichtung 1 das zu beheizende Medium zugeführt, welches über die Einführöffnung 36 in das Aufnahmevolumen des Gehäuses gelangt. Von der Einführöffnung 36 bis zur Ausgangsöffnung 36 wird das flüssige oder gasförmige zu beheizende Medium, vorzugsweise Dieselkraftstoff, vollständig durch den mäanderförmigen Kanal geführt und legt dabei gegenüber dem kürzesten Abstand der beiden Öffnungen 36 eine erheblich vergrößerte Strecke zurück. Das durch das Aufnahmevolumen strömende Medium wird beim Umströmen der beiden Kontaktelemente 4 bzw. des PTC-Heizelements stark erhitzt und erreicht die Ausgangsöffnung 32 beim jeweils anderen Anschlussstutzen 31 mit einer vorbestimmten Temperatur.

Der mäanderförmige Kanal zwischen den beiden Anschlussstellen 31 kann, wie oben bereits angedeutet wurde, allerdings auch dadurch erzeugt werden, dass derartige lamellenförmige Vorsprünge bzw. Kanalbildungsabschnitte 43 auf Seiten der Gehäuseinnenseite angeordnet sind und fest mit dem Gehäuse 2, 3 verbunden sind. Auch ist es möglich, ein gesondertes Element zur Ausbildung des mäanderförmigen Kanals zwischen zumindest einem der Kontaktelemente 4 und der Gehäuseinnenseite anzuordnen, um den erfindungsgemäßen Effekt zu erzielen. Darüber hinaus sind auch Weiterbildungen des Kompaktheizers denkbar, beispielsweise durch Anordnungen mehrerer paralleler Heizelemente 5 übereinander, wobei jeweils im Zwischenraum zwischen zwei Heizelementen 5 und zwischen den äußeren Heizelementen 5 und der Gehäuseinnenseite mäanderförmige Kanäle gebildet werden.

Der vorwiegend als Dieselheizer einzusetzende Kompaktheizer 1 weist beispielsweise die äußeren Abmessungen von 15 mm Gesamthöhe, 60 mm Gesamtbreite und 50 mm Gesamttiefe auf, und erreicht bei einer Kraftstofftemperatur von minus 20° und einer Durchlaufleistung von 180 l/h eine Heizleistung von ca. 500 W bei einer Spannung von 13,5 V Gleichstrom. Bevorzugt wird dieses Bauteil 1 als sogenannter Inline-Heizer vor dem Dieselfilter direkt in die Kraftstoffleitung eingeschleift. Eine Regelung mittels Thermostat kann zusätzlich in das Gehäuse 2,3 integriert werden. Die hohe Leistungsausbeute ergibt sich aus der mäanderförmigen Kraftstoffführung um die beiden einteilig gestanzten Kontaktbleche 4. Die Kontaktbleche 4 dienen gleichzeitig als Federelemente, welche sich an dem Gehäuse abstützen, um den Kontaktdruck zwischen den Kontaktblechen 4 und dem Heizelement 5 zu erzeugen. An die Kontaktbleche 4 angeformt finden sich Steckzungen 41, welche durch das Deckelteil 3 geführt werden. Der verwendete PTC-Baustein 5 kann einteilig oder mehrteilig sein. Das Gehäuse 2,3 ist für hohe Systemdrücke wie für die notwendige Gegenkraft zum Abstützen der Federsegmente 43 der inneren Bleche 4 mit Verstärkungs- bzw. Versteifungsrippen 23, 24 versehen. Vorteile sind neben der guten Leistung der Kompaktbauweise vor allem die einfache Montage. Nachdem alle Bauteile zusammengesteckt wurden, wird nurmehr das Deckelteil 3 mit einer zwischen liegenden Dichtung verclipst oder verschweißt.

## Patentansprüche

1. Heizeinrichtung (1) für ein gasförmiges oder flüssiges zu beheizendes Medium, vorzugsweise Dieselkraftstoff, mit einem Gehäuse (2), zumindest zwei im Wesentlichen in dem Gehäuse (2) angeordneten und vorzugsweise plattenförmigen Kontaktelementen (4), und wenigstens einem Heizelement (5), wobei die Heizeinrichtung (1) Kanalbegrenzungsabschnitte (43) aufweist, die mit wenigstens einer der Kontaktplatten (4) und/oder dem Heizelement (5) zumindest abschnittsweise einen im Wesentlichen mäanderförmigen oder schleifenförmigen Kanal zum Hindurchleiten des zu beheizenden Mediums bilden, **dadurch gekennzeichnet, dass** das Heizelement (5) zumindest abschnittsweise zwischen beiden Kontaktelementen (4) angeordnet ist, und dass die Kanalbegrenzungsabschnitte (43) als Federabschnitte (43) ausgebildet sind, die eine Federkraft erzeugen, um den Kontaktdruck zwischen den Kontaktelementen (4) und dem Heizelement (5) herzustellen.

2. Heizeinrichtung (1) nach einem der vorangegangenen Ansprüche, **dadurch gekennzeichnet, dass** sich die Kanalbegrenzungsabschnitte (43) im Wesentlichen senkrecht zur Ebene des Kontaktelements (4) erstrecken.

3. Heizeinrichtung (1) nach einem der vorangegangenen Ansprüche, **dadurch gekennzeichnet, dass** sich die Kanalbegrenzungsabschnitte (43) im Wesentlichen senkrecht zum Heizelement (5) erstrecken.

4. Heizeinrichtung (1) nach einem der vorangegangenen Ansprüche, **dadurch gekennzeichnet, dass** die Kanalbegrenzungsabschnitte (43) mit dem Gehäuse (2, 3) fest verbunden sind.

5. Heizeinrichtung (1) nach einem der vorangegangenen Ansprüche, **dadurch gekennzeichnet, dass** die Kanalbegrenzungsabschnitte (43) mit der Kontaktplatte (4) fest verbunden sind.

6. Heizeinrichtung (1) nach einem der vorangegangenen Ansprüche, **dadurch gekennzeichnet, dass** die Heizeinrichtung (1) ein gesondertes, Kanalbegrenzungsabschnitte (43) aufweisendes Kanalbildungselement umfasst.

7. Heizeinrichtung (1) nach einem der vorangegangenen Ansprüche, **dadurch gekennzeichnet, dass** die Kanalbegrenzungsabschnitte zwischen einer Gehäuseinnenseite und einem Kontaktelement (4) und/oder dem Heizelement (5) angeordnet sind.

8. Heizeinrichtung (1) nach einem der vorangegangenen Ansprüche, **dadurch gekennzeichnet, dass** zumindest ein Kontaktelement (4) als Federelement ausgebildet ist, das die eine Federkraft erzeugt, um den Kontaktdruck zwischen den Kontaktelementen (4) und dem Heizelement (5) herzustellen.

9. Heizeinrichtung (1) nach einem der vorangegangenen Ansprüche, **dadurch gekennzeichnet, dass** die Kontaktelemente (4) und das dazwischenliegende Heizelement (5) mit dem Deckel (3) zu einer Vormontagebaueinheit verbunden sind, und die Vormontagebaueinheit mit einer Aufnahmestruktur (2) des Gehäuses (2, 3) verbindbar ist.

10. Heizeinrichtung (1) nach einem der vorangegangenen Ansprüche, **dadurch gekennzeichnet, dass** das Kontaktelement (4) Aussparungen aufweist, durch welche das durch den Kanal fließende Medium in Kontakt mit dem Heizelement (5) gelangt.

11. Heizeinrichtung (1) nach einem der vorangegangenen Ansprüche, **dadurch gekennzeichnet, dass** die Fließrichtung des durch den Kanal fließenden Mediums im Wesentlichen längs und/oder quer zu den Kanten der Kontaktplatte verläuft.

12. Heizeinrichtung (1) nach einem der vorangegangenen Ansprüche, **dadurch gekennzeichnet, dass** das Gehäuse (2, 3) eine Aufnahmestruktur (2) mit einem Aufnahmevolumen zur Aufnahme der Kontaktelemente (4) und des Heizelements (5), und einen Deckel (3) zum Verschließen des Aufnahmevolumens umfasst, wobei der Deckel (3) zumindest eine Anschlussstelle (31) aufweist, um das zu beheizende Medium ein- und/oder auszuleiten.

13. Heizeinrichtung (1) nach einem der vorangegangenen Ansprüche, **dadurch gekennzeichnet, dass** der Deckel (3) zumindest einen elektrischen Anschluss zum Anschließen der Kontaktelemente (4) an einen Stromkreis aufweist.

14. Heizeinrichtung (1) nach einem der vorangegangenen Ansprüche, **dadurch gekennzeichnet, dass** elektrisch leitende Abschnitte (41) zum Anschließen der Kontaktelemente (4) an einen Stromkreis den Deckel durchdringen.

## Claims

1. A heating device (1) for a gaseous or liquid medium to be heated, preferably diesel fuel, comprising a housing (2), at least two preferably plate-shaped contact elements (4) substantially disposed within the housing (2), and at least one heating element (5), the heating device (1) having channel defining sections (43) which with at least one of the contact plates (4) and/or the heating element (5) form at least in sections a substantially meander- or loop-shaped channel through which the medium to be heated is guided, **characterised in that** the heating element (5) is disposed at least in sections between two contact elements (4) and that the channel defining sections (43) are in the form of spring sections (43) which generate a spring force in order to produce the contact pressure between the contact elements (4) and the heating element (5).

2. The heating device (1) according to any of the preceding claims, **characterised in that** the channel defining sections (43) extend substantially perpendicularly to the plane of the contact element (4).

3. The heating device (1) according to any of the preceding claims, **characterised in that** the channel defining sections (43) extend substantially perpendicularly to the heating element (5).

4. The heating device (1) according to any of the preceding claims, **characterised in that** the channel defining sections (43) are securely connected to the housing (2, 3).

5. The heating device (1) according to any of the preceding claims, **characterised in that** the channel defining sections (43) are securely connected to the contact plate (4).

6. The heating device (1) according to any of the preceding claims, **characterised in that** the heating device (1) comprises a separate channel formation element having channel defining sections (43).

7. The heating device (1) according to any of the preceding claims, **characterised in that** the channel defining sections are disposed between an inner side of the housing and a contact element (4) and/or the heating element (5).

8. The heating device (1) according to any of the preceding claims, **characterised in that** at least one contact element (4) is in the form of a spring element which generates a spring force in order to produce the contact pressure between the contact elements (4) and the heating element (5).

9. The heating device (1) according to any of the preceding claims, **characterised in that** the contact elements (4) and the heating element (5) lying between the latter are connected to the cover (3) to form a pre-assembled structural unit, and the pre-asserbled structural unit can be connected to a retaining structure (2) of the housing (2, 3).

10. The heating device (1) according to any of the preceding claims, **characterised in that** the contact element (4) has recesses by means of which the medium flowing through the channel comes into contact with the heating element (5).

11. The heating device (1) according to any of the preceding claims, **characterised in that** the direction of flow of the medium flowing through the channel extends substantially along and/or laterally to the edges of the contact plate.

12. The heating device (1) according to any of the preceding claims, **characterised in that** the housing (2, 3) comprises a retaining structure (2) with a retained volume for retaining the contact elements (4) and the heating element (5) and a cover (3) for sealing off the retained volume, the cover (3) having at least one connection point (31) in order to convey the medium to be heated in and/or out.

13. The heating device (1) according to any of the preceding claims, **characterised in that** the cover (3) has at least one electric connection for connecting the contact elements (4) to an electric circuit.

14. The heating device (1) according to any of the preceding claims, **characterised in that** the electrically conductive sections (41) for connecting the contact elements (4) to an electric circuit penetrate through the cover.

## Revendications

1. Dispositif de chauffage (1) pour un fluide gazeux ou liquide à chauffer, de préférence le diesel, comportant un carter (2), au moins deux éléments de contact (4), disposés sensiblement dans le carter (2) et réalisés, de préférence, en forme de plaques, et au moins un élément chauffant (5), ledit dispositif de chauffage (1) comportant des tronçons de délimitation de canaux (43) qui, conjointement avec au moins une des plaques de contact (4) et/ou l'élément chauffant (5), forment au moins par zones un canal sensiblement en forme de méandres ou en forme de boucle pour la circulation du fluide à chauffer, **caractérisé en ce que** l'élément chauffant (5) est disposé au moins par zones entre deux éléments de contact (4), et **en ce que** les tronçons de délimitation de canaux (43) sont réalisés sous forme de tronçons à ressort (43), qui génèrent une force de ressort pour produire une pression de contact entre les éléments de contact (4) et l'élément chauffant (5).

2. Dispositif de chauffage (1) selon la revendication précédente, **caractérisé en ce que** les tronçons de délimitation de canaux (43) s'étendent sensiblement perpendiculairement au plan de l'élément de contact (4).

3. Dispositif de chauffage (1) selon l'une quelconque des revendications précédentes, **caractérisé en ce que** les tronçons de délimitation de canaux (43) s'étendent sensiblement perpendiculairement à l'élément chauffant (5).

4. Dispositif de chauffage (1) selon l'une quelconque des revendications précédentes, **caractérisé en ce que** les tronçons de délimitation de canaux (43) sont reliés fermement au carter (2).

5. Dispositif de chauffage (1) selon l'une quelconque des revendications précédentes, **caractérisé en ce que** les tronçons de délimitation de canaux (43) sont reliés fermement à la plaque de contact (4).

6. Dispositif de chauffage (1) selon l'une quelconque des revendications précédentes, **caractérisé en ce que** le dispositif de chauffage (1) comporte un élément de formation de canal séparé, comportant des tronçons de délimitation de canaux (43).

7. Dispositif de chauffage (1) selon l'une quelconque des revendications précédentes, **caractérisé en ce que** les tronçons de délimitation de canaux sont disposés entre une face intérieure du carter et un élément de contact (4) et/ou l'élément chauffant (5).

8. Dispositif de chauffage (1) selon l'une quelconque des revendications précédentes, **caractérisé en ce qu'**au moins un élément de contact (4) est réalisé sous forme de ressort, qui génère la force de ressort destinée à produire la pression de contact entre les éléments de contact (4) et l'élément chauffant (5).

9. Dispositif de chauffage (1) selon l'une quelconque des revendications précédentes, **caractérisé en ce que** les éléments de contact (4) et l'élément chauffant (5) intercalé sont reliés au couvercle (3) pour former une unité de montage préalable, et ladite unité de montage préalable peut être reliée à une structure de réception (2) du carter (2, 3).

10. Dispositif de chauffage (1) selon l'une quelconque des revendications précédentes, **caractérisé en ce que** l'élément de contact (4) comporte des évidements à travers lesquels le fluide circulant à travers le canal entre en contact avec l'élément chauffant (5).

11. Dispositif de chauffage (1) selon l'une quelconque des revendications précédentes, **caractérisé en ce que** la direction d'écoulement du fluide circulant à travers le canal est orientée sensiblement longitudinalement et/ou transversalement aux bords de la plaque de contact.

12. Dispositif de chauffage (1) selon l'une quelconque des revendications précédentes, **caractérisé en ce que** le carter (2, 3) comporte une structure de réception (2) avec un compartiment de réception, destiné à recevoir les éléments de contact (4) et l'élément chauffant (5), et un couvercle (3) destiné à obturer le compartiment de réception, ledit couvercle (3) comportant au moins un point de raccordement (31) pour l'admission et/ou l'évacuation du fluide à chauffer.

13. Dispositif de chauffage (1) selon l'une quelconque des revendications précédentes, **caractérisé en ce que** le couvercle (3) comporte au moins un branchement électrique pour raccorder les éléments de contact (4) à un circuit électrique.

14. Dispositif de chauffage (1) selon l'une quelconque des revendications précédentes, **caractérisé en ce que** des tronçons (41) électroconducteurs traversent le couvercle en vue de raccorder les éléments de contact (4) à un circuit électrique.
